# NEW EUROPEAN PATENT SPECIFICATION

(11) **EP 2 128 279 B2**
(45) Date of publication and mention of the opposition decision: **16.09.2015**
(45) Mention of the grant of the patent: 30.03.2011
(21) Application number: 09161329.9
(22) Date of filing: 28.05.2009
(51) Int. Cl.: C22B 7/00, C22B 7/04, B03B 9/04, B03B 9/06, B03C 1/24, B03C 1/247, B02C 13/00

(54) **Method for separating metal-containing fractions from dry slag and the use of this method for waste incineration slag.**
Verfahren zur Trennung metallhaltiger Teile aus Trockenschlacke und Verwendung dieses Verfahrens für eine Müllverbrennungsschlacke
Procédé de séparation de fractions métalliques de laitier sec et utilisation de ce procédé pour cendres d'incinération de déchets

(30) Priority: 30.05.2008 NL 2001639; 08.12.2008 NL 2002300
(43) Date of publication of application: 02.12.2009
(73) Proprietor: Recco B.V., 1921 CX Akersloot (NL)
(72) Inventor: Groothoff, Jan Andreas, 2111 BT AERDENHOUT (NL)
(74) Representative: EP&C

(56) References cited:
- WO-A-01/03844
- WO-A-02/066164
- WO-A-2006/041281
- DE-A1- 19 634 802
- DE-A1- 19 832 828
- US-A- 5 992 776
- H. SCHUBERT: 'Handbuch der mechanischen Verfahrenstechnik', 2003, WILEY-VCH, WEINHEIM pages 687 - 699
- G. SCHMELZER: 'Separation of metals from waste incineration residue by application of mineral processing', vol. 4, part 28 deel 'proceedings of the XIX International Mineral Processing Congress', pages 137 - 140

## Description

The present invention relates to a method for separating metal-containing fractions from slag comprising the successive steps of: supplying the slag; processing the slag into fractions and pre-separating the fractions wherein substantially all iron-containing fractions are separated using, for example, neodymium or ferrite magnets. The iron-containing fractions can, for example, be slag particles with embedded iron particles. These iron-containing fractions are slightly magnetic. Subsequently, the method has a step in which non-ferrous metal-containing fractions are separated using an eddy current separator.

Such a method is known from prior art. For example, this method is used when processing waste incineration slag that originates from a waste incinerator. The waste incineration slag that has just come from the incinerator is first cooled using water. The wet waste incineration slag that substantially comprises pieces with sizes that vary between 0 and 250 mm are, subsequently, supplied to a separation device. The slag is processed to produce fractions during an initial step in the separation device. This, for example, takes place using a crushing device or grinding device. Often, part of the slag is manually sorted parallel to this step. Large metal-containing pieces can be sorted early in the process due to this manual sorting, which improves the method's efficiency. After the processing to obtain fractions, the iron-containing fractions are separated. This step in the method is referred to as pre-separation. A considerable part of the supplied fractions can already be separated through pre-separation using, for example, a powerful magnet. Subsequently, the non-ferrous metal-containing fractions are separated using an eddy current separator.

An important disadvantage of the known method is that a too small part of the present non-ferrous metal in the fractions can be separated. In separation technology for waste incineration slag but also for the separation of other slag, one is oriented towards separating as much metal as possible from slag with the highest possible purity of the metals.

WO 02/066164 discloses a method to recover ferrous and non-ferrous metals from the slag of a garbage incinerating plant. A step is mentioned of reducing the slag into fractions smaller than 5mm. The small slag fractions are separated into fractions of ferrous, non-ferrous and V2A steel. It is explained that an eddy current separator is suitable to separate non-ferrous metals out of the slag. However, no disclosure is given of an arrangement of a eddy current separator to separate the non-ferrous fractions out of the small slag fractions.

WO 01/03844 relates to a method for separating a fraction containing non-ferrous metals from an electronic scrap preparation. Electronic scrap is supplied in fractions to a trough wherein a dust fraction having a particle of at most 4 mm is discharged to a separating table. The fractions are subdivided into ball shaped fractions and flat shaped fractions. Relative small fractions are discharged before the fractions are supplies to a non-ferrous separator. As indicated, the relative small fractions may disturb the separating process and are not fully separatable in the non-ferrous separator.

A first problem is that the disclosed method is typically arranged to separate slag originating from electronic scrap which has a relatively high concentration of metal containing fractions. The disclosed method is not suitable to treat and separate waste slag originating from an incineration installation, because waste slag has in comparison with electronic scrap typically a relatively low concentration of metal containing fractions.

A further problem is that relatively small fractions are treated by a vibrating table which is inefficient and time consuming.

"Separation of metals from waste incineration residue by application of mineral processing" by G. Schmelzer concerns the treatment of solid residues produced by waste incineration plants whereby mineral incineration ash is completely immobilised through nitrification. An eddy-current separator is employed at a maximum rotational speed of the permanent magnet rotating concentrically in the drum at 3000 Rpm.

The aim of the present invention is to provide a method that will at least overcome one of the aforementioned disadvantages at least in part or at any rate to provide a useful alternative. Particularly, the invention has the aim of providing a method with a very high degree of separation of metal from slag. Furthermore and particularly, the invention has the aim to obtain clean residual material that meets the qualification to serve as replacement for raw material or sand/granulate for the production of cement, concrete products or asphalt.

This aim is achieved with a method as defined in claim 1.

Characteristic of the method according to the invention is that the fractions have a size of at most 5 mm and a moisture content of at most 5% when non-ferrous metal-containing fractions are separated. Surprisingly, it has been shown that non-ferrous metal-containing particles can be recovered to a high extent by limiting the size of the fraction up to at most 5 mm. It has been shown that many fractions comprise substantially pure metals. For the separation using an eddy current separator, it is important that the fractions be kept dry so that fraction clumping is limited as much as possible. By using the method according to the invention it is an advantage that considerable land-filling costs can be saved because the residual material can meet the qualifications that are set to determine whether the residual material has an inert leaching behaviour. It has been shown to advantage that such a high separation quality can be achieved that a residual material can be obtained that meets the set qualifications to serve as replacement raw material for the production of cement or concrete products or as aggregate in asphalt. As an additional advantage, extracted metals can be traded. In a special embodiment of the method according to the invention the method comprises a step in which fractions are washed. The slag can be thoroughly washed after which it is dried. The slag may also first have been cooled using water. The fractions are preferably washed before the step of separating non-ferrous metal-containing fractions is performed. Salts and/or a fine dust fraction with a size of at most 1 mm can be removed through washing. After the washing step, the fractions can be dried for further processing according to with the method according to the invention. This embodiment is, for example, especially suitable for the removal of metals and magnetic fractions from waste incineration slag.

It has also been shown that in an advantageous embodiment of the method according to the invention one can work with dry slag during all the steps of the method to ultimately be able to separate a higher percentage of the metals present. The dry slag has a moisture content of at most 5%. In practice, reference is made to bone-dry. When the moisture percentage in the slag is too high, the metals will diffuse in the slag and, therefore, it will be very difficult to separate the metals later on in a mechanical way. In this embodiment this means for waste incineration slag that the slag no longer needs to be subjected to a cooling process step using water or another cooling medium. Furthermore, the washing and drying are, preferably, not performed. This could mean that the moisture content of the waste incineration slag could become too high. As a result of the insight that work takes place with a dry process according to the invention instead of a wet process, metal can advantageously be removed from the slag with a higher efficiency. Due to the method according to the invention, such a high percentage of metals can be separated from the slag that residual clean slag fractions can be considered for use in, for example, the cement industry as raw material replacement. This is not just advantageous because this means that savings can be made with regard to raw materials but also because savings can be achieved herewith with regard to deposit charges. In any case, considerable savings in deposit charges can be achieved because considerably fewer metals remain in the deposited slag fractions. Profits can be achieved therewith through the sale of the extracted metals to traders in metals.

According to the invention, it has also been shown that a higher separation degree of metals can be achieved advantageously by ultimately processing substantially all the slag into fractions with a dimension of at most 5 mm. The fractions of at most 5 mm are further conveyed in a stream for further processing according to the method according to the invention. An explanation for the improved separation with regard to a stream of fractions with a maximum dimension of at most 5 mm can be that a so-called monocell structure of the fractions is obtained with regard to this dimension. Due to this, the fractions substantially comprise one type of material so that a higher degree of material purity can be obtained when the fractions are separated later on. Tests have shown that a separation degree of metals from the slag of at least 95% can be achieved. Furthermore, it has been shown that this fraction has a significant higher content of copper and brass as well as of aluminum. In practice, it is hereby assumed that all physically observable metals are separated. It has been shown that an optimal operation of the eddy current separator can be achieved when the fraction size is at most 5 mm. This eddy current separator has, namely, the tendency to start to spray with larger fractions so that the accuracy of the separation is reduced.

In a special embodiment of the method according to the invention, a part of the fractions is separated before the stream of fractions of at most 5 mm of iron-containing fractions is stripped. Preferably, the fractions with a dimension of at most 1 mm, the so-called fine dust fraction, are separated from the stream of fractions with dimensions of up to at most 5 mm. This can be achieved by, for example, removing by suction or by using a vibrating screen. Preferably, however, a special screen unit is used to separate the fine dust fraction where the screen unit has a screen cover with a cleaning device. The screen cover can, for example, be kept clean automatically using vibrating rubber balls that bounce against the bottom side of the screen cover. After the removal of the fine dust fraction, a stream of fractions remains with dimensions of at least 1 mm and at most 5 mm for further processing. As a result of the prior separation of the fine dust fraction the further separation process has, therefore, been simplified and is more efficient.

In an embodiment of the method according to the invention a method step can be performed where iron-containing fractions are separated for the step of separating the fine 0-1 mm dust fraction. Preferably, a magnet drum is used within this context with a ferrite magnet that has strength of approximately 900-1000 Gauss. The advantage of this is that small iron particles that can obstruct the screen for fine dust fractions of a supply pipe can be trapped due to this step. The small iron particles are typically staples, iron threads, etc.

The stream of fractions with dimensions of at most 5 mm is first subjected to a step of pre-separation according to the invention where iron-containing fractions are separated. Preferably, a neodymium magnet with a roller is used for the pre-separation in the separation device because this will generate a powerful magnetic field. A magnetic field of 9000 - 9500 Gauss can be obtained on the surface of the roller when a powerful neodymium magnet is used.

In a particular embodiment, a double neodymium magnetic roller is used for the pre-separation where the magnetic rollers are set up using a cascade set-up. Furthermore, it is advantageous that the iron-containing fractions are already separated at the start of the method so that the iron-containing particles do hot represent an inconvenience any more when later on the non-ferrous metal-containing fractions are separated using a special non-ferrous separator. Any iron-containing particles that may still be present will disrupt the operation of this non-ferrous separator with regard to weaker eddy currents.

After pre-separation, other non-ferrous metal-containing fractions are separated from the stream of fractions according to the invention. An eddy current separator is used for the separation of the non-ferrous fractions. The eddy current separator is particularly a separator with a non-metal drum with therein a fast rotating magnetic rotor for generating current variations on the surface of the drum. The non-ferrous fractions are preferably supplied to the drum of the eddy current separator through a feed belt. The drum is set up at the end of the feed belt. The fast rotating magnetic rotor rotates against the conveyance direction of the stream fractions. It has been shown that separating non-ferrous metal-containing fractions with regard to a stream of fractions with a maximum dimension of up to at most 5 mm with a magnetic rotor rotating against the conveyance direction is more effective. The non-ferrous metal-containing fractions can advantageously be separated with a higher purity from the non-metal-containing fractions.

In the method according to the invention, an extra powerful eddy current separator is used. The eddy current separator can be extra powerful or more effective due to various measures.

According to the invention, an eddy current separator with an increased number of magnetic poles on the magnetic rotor is used. The frequency can increase due to the increased number of poles with which the eddy currents fluctuate in the fractions. Due to this, a more accurate discharge of non-ferrous metals can be realised, which further increases the efficiency of the separation process. The used magnetic rotor in the eddy current separator has at least 40 magnetic poles but in a further preferred option the magnetic rotor has at least 44 poles. In practice, it has been shown that an increase of the number of poles on the magnetic rotor to 44 poles can provide an especially favourable result. This guarantees that the eddy current separator is pre-eminently suitable to be used with regard to fractions that have a size of at most 5 mm.

The magnetic rotor in the drum of the eddy current separator is rotated at a speed of at least 4000 rpm. It has been shown that separation can be more efficient at these higher speeds. Preferably, the speed of the rotating magnetic rotor is at least 4500 rpm and with regard to a further preference at least 5000 rpm.

In a further preferred embodiment of the method according to the invention, at least two eddy current separators are set up in a cascade set-up. Preferably, three eddy currant separators are set up one after the other to separate the metal-containing fractions from the supplied stream of fractions with a dimension of at most 5 mm. The metal-containing fractions are separated advantageously with a higher purity because of the set-up or multiple eddy current separators one after the other.

The aforementioned measures to optimize the eddy current separator such as setting the turning speed, the correct turning direction, the use of a magnetic roller with at least 40 poles and the cascade set-up can be used in combination. The eddy current separator is in particular suitable for use in the method according to the invention for the separation with regard to the small fraction size due to the combination of measures.

In a special embodiment according to the invention, glass-containing fractions are separated in a further step. Preferably, optical sensors will be used hereto wherein outlet valves blow the glass-containing fractions from the stream of fractions.

In a further particular embodiment according to the invention, stainless steel-containing fractions are also separated in a further step of the method. Preferably, sensors and outlet valves are used hereto to blow the stainless steel-containing fractions from the stream fractions. Fractions that have a size of at least 16 mm are suitable to be recovered through sensor separation. As an alternative or as a supplement, coarser stainless steel fractions of, for example, at least 60 mm can be separated manually.

In a preferred embodiment of the method according to the invention, the step of processing coarse slag to obtain fractions that have a size of at most 5 mm comprises a number of intermediate steps. In an intermediate step, the fractions that have a size of at least 5 mm are separated in an A-stream of 5-60 mm fractions and a B-stream of at least 60 mm up to approximately 200 mm fractions.

Subsequently, the fractions of the A-stream are screened in a first effluent of fractions that have a size of 16 to approximately 60 mm and a second effluent of fractions that have a size of approximately 5 to approximately 16 mm. In an embodiment of the method according to the invention, the A-stream of fractions can be broken and screened after a provisional separation based on metals in a first effluent of fractions that have a size of 16-60 mm and a second effluent of fractions with a size of up to at most 16 mm. Glass-containing and/or stainless steel-containing fractions can be separated from the first and second effluents.

The tolerance at these upper limits is approximately 5 mm. This is possible by using standard screening techniques. The effluents are led over a separation unit with a magnet to separate the iron-containing fractions.

An eddy current separator is used with at least 22, particularly, at least 33 magnetic poles where the magnetic rotor rotates in the conveyance direction during operation at a speed of at least 3000 rpm but preferably at least 3500 rpm to separate the non-ferrous fractions for the first effluent of 16-60 mm, preferably, after magnetic separation through a standard neodymium magnet either in a roller form or overband magnet.

An eddy current separator is used with at least 40, particularly, at least 44 magnetic poles where the magnetic rotor rotates with the conveyance direction during operation at a speed of at least 3000 rpm but preferably at least 3500 rpm to separate the non-ferrous fractions for the second effluent of 5-16 mm preferably after magnetic separation through a standard neodymium magnetic roller or overband magnet.

In a further intermediate step, stainless steel-containing fractions can be separated from the A-stream according to the method according to the invention through sensor separation before the stream of fractions is further processed.

In an embodiment of the method according to the invention, the B-stream of fractions is broken and screened into fractions that have a size of at most 60 mm after a first provisional separation based on metals.

In an embodiment of the method according to the invention, the provisional separation of the B-stream comprises a step where metals are separated manually and/or a step where separation takes place using sensors and outlet valves.

The non-ferrous metals can be removed manually or through sensor separation from the fractions of the 60-200 mm B-stream and ferrous particles can be removed through an overband magnet. Thereafter, the remaining slag fractions are broken and screened into fractions that have a size of at most 60 mm. Subsequently, these fractions can be supplied to the A-stream fractions.

Ultimately, the size of all fractions through the aforementioned intermediate steps is reduced to a size of at most 5 mm where the fractions have a so-called monocell structure.

Furthermore, the invention relates to the use of the method according to the invention with regard to waste incineration slag from a waste incinerator. In the prior art the waste incineration slag is cooled using water or another cooling medium. According to the invention, this moistening, however, is omitted because dry slag is processed in the method. Metals diffusing or dissolving in the waste incineration slag is counteracted to advantage because the slag is kept dry. The dry waste incineration slag is subsequently suitable to be subjected to the above described steps from the method according to the invention.

Advantageously, a considerably large yield of non-ferrous metals has been attained from the waste incineration slag. It has even been possible to generate 3 to 4 times as much yield of non-ferrous metals from the waste incineration slag when compared to traditional separation methods based on wet waste incineration slag by using the method according to the invention. It has also been shown that the use of the method according to the invention with regard to waste incineration slag is particularly favourable for recovering metals from electric components. Apparently, the exclusively dry processing of waste incineration slag results in a very high portion of non-ferrous (non-iron-containing) metal-containing fractions in the fine slag fraction of at most 5 mm. A monocell structure of the substances to be separated is already present in the fine slag fraction, which considerably improves the recovery of metal-containing fractions. Particularly the portion of recovered aluminium, copper and brass can be considerably higher. Additionally, it is apparently advantageous to ensure that all remaining coarse slag is given the same monocell structure through breaking and screening after the initial separation of metals to, ultimately, again separate through the same technique as with the original fine fraction for the still present ferrous and non-ferrous metals according to the method of the invention.

Advantageously, a larger gain can be achieved therewith through selling the extracted metals and a greater saving can be achieved due to lower costs for dumping the remaining cleaner fractions.

An important advantage is, furthermore, that CO₂ rights can be obtained due to the extraction of metals from a secondary process such as the method according to the invention.

It is, furthermore, advantageous that the investment costs for setting up a separation device for executing the method according to the invention are low, where the return on investment can be kept short.

In the prior art, the waste incineration slag from the incinerator is cooled using water and, therefore, the slag becomes wet. In the method according to the invention, however, dry slag forms the basis. Small waste incineration fractions can whirl up to from a stream of waste incineration fractions after the processing of the waste incineration slag because a cooling step using water on the waste incineration slag is absent. In an embodiment according to the invention, a separation device for the execution of the method is positioned near an outlet of the waste incinerator. This advantageously prevents that small waste incineration fractions are spread around the whole of the factory as dust and that this leads to problems particularly at transfer points. Already 30% of the total quantity of slag can be separated into fractions that have a size of at most 5 mm by immediately starting with the separation at the outlet of the waste incinerator. It has been shown that there is a high content of copper and brass in the original fine slag fraction in addition to aluminum. According to the method according to the invention, the recovery of metals from the incineration of electronic goods waste is particularly successful. Substantially all present metals in the waste incineration slag can be recovered with a high purity by also processing the remaining course waste incineration slag to obtain small fractions where the fractions are given a monocell structure.

The invention will be further explained based on the enclosed drawings that show a practical version of the invention but may not be regarded as being limiting, in which:
Figure 1 shows a flowchart of steps from the method according to the invention;
Figure 2 shows an extensive flowchart of steps preceding the steps from the method according to the invention;
Figure 3 shows a flowchart as shown in fig. 2 where further steps for the separation of stainless steel and glass are provided; and
Figure 4a, 4b shows views of an eddy current separator that is particularly suitable for executing the method according to the invention.

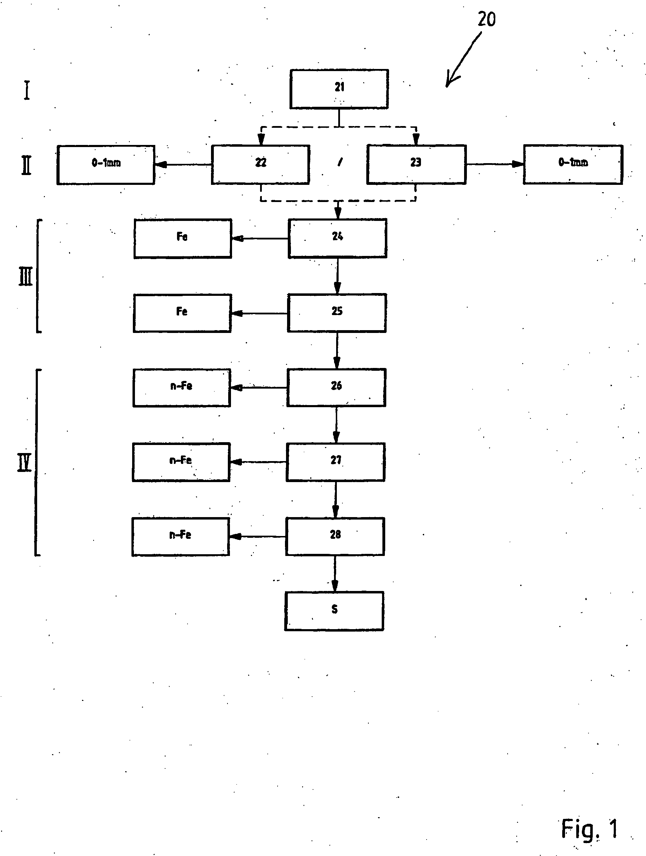

Figures 1-3 show various flowcharts of the method according to the invention. Figure 1 shows a flowchart 20 in which dry dust fraction that has a size of at most 5 mm is processed. Iron-containing fractions Fe and other metal-containing fractions N-Fe can be separated from the remaining fractions S from the dust fraction of at most 5 mm. Flowchart 20 comprises four different phases: I, II, III, IV.

In the first phase I, dry slag that has been processed to produce fractions with a maximum dimension of 5 mm is supplied. The fractions that have a size of at most 5 mm, so-called dust fraction 21, are supplied through a feed belt.

In the next phase II, part of the dust fraction is separated using a separation device. This can, for example, be achieved with a finishing screener 22 or with a scrubber 23. The finishing screener 22 is a vibrating screen. A fine dust fraction of 0-1 mm is separated from the coarser dust fraction of 1-5 mm because the vibrating screen vibrates. The vibrating screen has a screen cover that has a self-cleaning mechanism. The self-cleaning mechanism comprises rubber balls that move because the vibrating screen vibrates and consequently they clean the screen cover. A scrubber 23 can be used as an alternative for the finishing screener 22 or in combination with the finishing screener 22. The scrubber 23 comprises a chamber with a suction system. The fine dust fraction can be suctioned from the fractions with dimensions between the 1 and 5 mm using the suction system. After the separation of the fine dust fraction, a dust fraction of 1-5 mm remains that is subsequently further processed in a third phase III.

A method step can first be executed for the step of separating the fine dust fraction. 0-1 mm using the scrubber 23 or the finishing screener 22 where iron-containing fractions are separated. Preferably, a magnetic drum is used with a ferrite magnet with a strength of approximately 900-1000 Gauss. The finishing screener 22 can have been set up solely on the magnetic drum. This magnetic drum can be of the same type as magnetic drums that are further used for the separation of iron-containing fractions.

In the third phase III, a pre-separation is executed using a magnetic field. The fractions pass a magnetic field in a stream during pre-separation. Due to this the iron-containing fractions can be separated from the stream of fractions. The iron-containing fractions that are discharged in the third phase III have a fraction size that varies from 1 to 5 mm. The further process of the method according to the invention is favourably influenced due to the pre-separation of the fractions. For an optimal separation result, a neodymium magnetic roller is used. The neodymium magnetic roller is extra powerful where the magnetic strength on the surface of the magnetic roller is approximately 9000-9500 Gauss. Due to this, the magnetic roller is pre-eminently suitable for the pre-separation of small iron-containing fractions. Two magnets 24, 25 can be positioned one behind the other for the further improvement of the separation result.

In a fourth phase IV of the method according to the invention, the stream fractions pass three eddy current separators, so-called eddy current separators 26, 27, 28. A changing magnetic field is generated by using the eddy current separator. When an electrically conductive fraction passes this changing magnetic field, an electric tension, a so-called eddy current, is generated in the fraction. Every eddy current generates hereby its own magnetic field that is the opposite of the magnetic field that dominates in the immediate environment of the fraction. This ensures that the electrically conductive fractions from the magnetic field are repelled and flung away. The fractions are repelled or dragged differently due to the material differences of the fractions so that a separation of the fractions occurs. In the method according to the invention, the electrically conductive fractions are the metal-containing fractions. This comprises non-ferrous metals because in a previous phase of the method substantially all iron-containing metals have already been separated.

The used eddy current separators have a magnetic rotor that rotates during operation with a speed of at least 4000 rpm. The used magnetic rotor is provided with at least 40 magnetic poles for generating a high frequentative magnetic field. The magnetic rotor rotates against the conveyance direction of the stream of supplied fractions during operation.

The three eddy current separators 26, 27, 28 have been positioned in a cascade set-up. Due to this, the stream of fractions is subjected up to three times to an eddy current separator, 26, 27,28, which positively influences the separation result. Using two eddy current separators in a cascade set-up also already considerably improves the separation result but it has been shown that an optimal separation result of a separation of at least 95% of the metal-containing fractions can be achieved with a third separation device 28. After the separation of the iron-containing fractions in the third phase and the other metal-containing fractions in the fourth phase, a stream of purified fractions S remains.

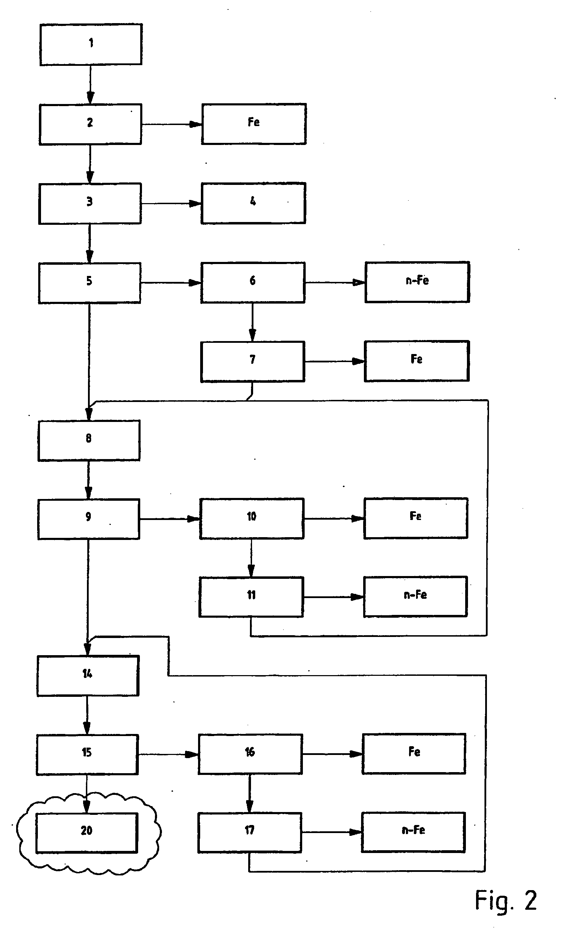

Figure 2 shows a flowchart in which flowchart 20 as shown in figure 1 has been integrated. Figure 2 shows method steps that can precede the steps in the method according to the invention as shown in flowchart 20.

The flowchart starts with the supply of course slag 1 to a magnetic separator 2. The coarse slag 1 is dry slag where the moisture content of the coarse slag is 1 or at most 5%. Iron-containing particles from the coarse slag 1 are separated using the magnetic separator 2. Subsequently, the coarse slag 1 is passed on to a screen 3 where fractions with a dimension larger than approximately 200 mm are passed back to waste incineration 4. Fractions with dimensions smaller than approximately 200 mm are passed on to a next screen 5 where the fractions are separated to approximately 60 mm. The fractions that are smaller than approximately 60 mm are passed on in an A-stream to a crusher 8. The fractions that are larger than approximately 60 mm are passed on in a B-stream to a manual sorter or sensor separator 6. The non-ferrous metal-containing fractions are separated here. Subsequently, the remaining iron-containing fractions are separated in a magnetic separator 7. After the magnetic separator 7, the A-stream and the B-stream of fractions that come from the screen 5 are again merged and passed on to the crusher 8.

Subsequently, the stream of fractions is supplied to a screen 9 where the stream of fractions is separated based on approximately 16 mm. The fractions that are larger than 16 mm are passed on to a first circuit with a magnetic separator 10 and an eddy current separator 11. The iron-containing fractions are separated using the magnetic separator 10. The stream of fractions with dimensions larger than 16 mm is, subsequently, passed on to an eddy current separator 11 where the remaining metal-containing fractions are separated. After the magnetic separator 10 and eddy current separator 11, the stream of fractions is fed back to the crusher 8.

The stream of fractions with dimensions smaller than 16 mm are passed on to a second crusher 14 after screening in the screen 9. The stream of fractions, subsequently, leaves the crusher 14 and is passed on to a last screen 15 in the flowchart where the stream of fractions is separated based on approximately 5 mm. Analogously to the first circuit between the crushers 8 and 14, the stream of fractions with dimensions larger than 5 mm is subsequently separated by using a second circuit with a magnetic separator 16 and an eddy current separator 17. The stream of fractions with dimensions of at most 5 mm is, subsequently, further processed according to the method steps that have been shown in the flowchart 20 of figure 1.

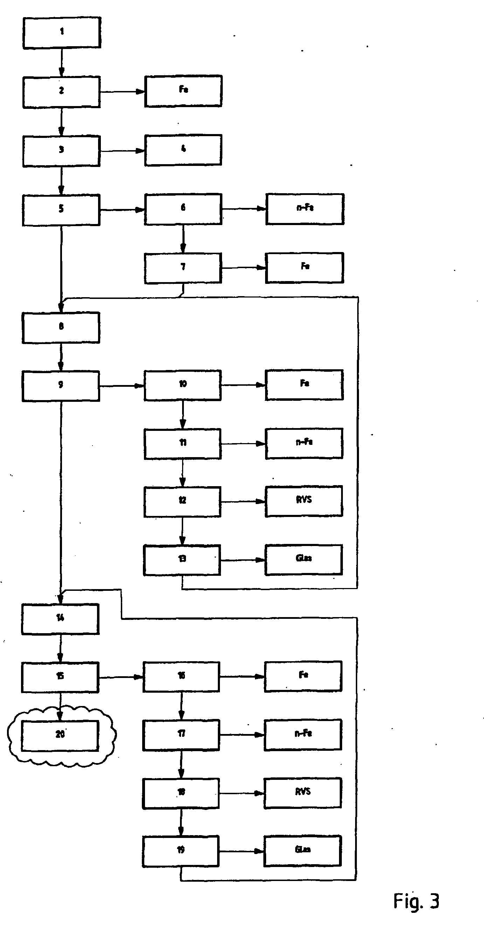

Subsequently, figure 3 shows an expansion of the flowchart as shown in figure 2. The flowchart in figure 3 has been extended to include separator units for the separation of stainless steel and glass. To this end, a stainless steel separator 12, 18 and a glass separator 13, 19 have been provided in the first circuit between the screen 9 and the crusher 8 and the analogously thereto set-up second circuit between the screen 15 and the crusher 14. In the circuits between the screen and the crusher, the stream of fractions first passes a magnetic separator 10, subsequently, an eddy current separator 11, thereafter, a stainless steel separator 12 and finally the glass separator 13.

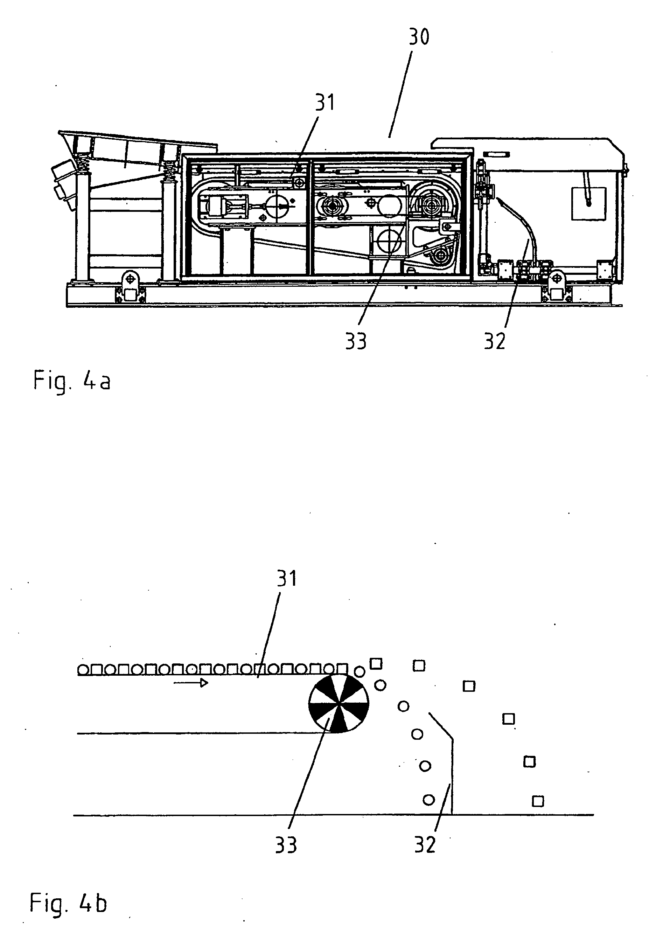

Figure 4a shows an eddy current separator in a side view that is suitable for using in the method according to the invention. The eddy current separator 30 is provided with a feed belt 31 for the supply of the non-ferrous metal-containing fractions. The eddy current separator 30 is further provided with a drum with therein a rotating magnetic roller 33. In addition to the magnetic roller, a separator wall 32 has been set up to realize a separation between fractions repelled from the drum. The drum is positioned at the end of the feed belt 31. The magnetic roller rotates against the conveyance direction of the feed belt during operation. The magnetic roller 33 is made of neodymium and is rotated at a speed of least 4000 rpm. At such a high rotational speed, the eddy current is further suitable for the separation of small fractions. The magnetic roller in the drum of the eddy current separator is provided with at least 40 poles for energizing the drum. Due to the high rotational speed and the high number of poles, the frequency of the generated alternating magnetic field is very high due to which the eddy current separator is particularly suitable for the separation of small fractions.

Figure 4b shows the operation of the eddy current separator from figure 4a in a schematic side view. An arrow at the feed belt 31 indicates the conveyance direction of the stream of fractions. At the end of the feed belt the stream of fractions goes over the drum in which the magnetic roller 33 rotates. The magnetic roller is rotated against the conveyance direction, here anticlockwise, to achieve a higher separation degree. The fractions that pass the drum will be attracted or repelled by the alternating magnetic field so that separation occurs between the fractions.

In addition to the shown embodiment, variants can be used without stepping outside of the protection scope as defined in the claims.

Thus, the method according to the invention provides a method for the separation of metal-containing fractions from slag. The method is used for slag that originates from waste incineration. A high degree of separation of metal from slag can be obtained by using the method according to the invention. The quality of the remaining fractions can be so high that the fractions can be reused as building material or raw material or sand/granulate replacement for, for example, the cement or concrete industry, particularly, the lean concrete asphalt industry. The remaining fractions can be given the qualification of inert substance, which can already be a considerable saving on any land-filling costs.

## Claims

1. Method for the separation of metal-containing fractions (20) from waste incineration slag from a waste incinerator comprising the successive steps of:
- supplying of the waste incineration slag;
- processing of the slag into fractions;
- pre-separation of the fractions having a size of at most 5mm wherein iron-containing fractions are separated (24, 25);
- separation of non-ferrous metal-containing fractions (21) having a size of at most 5mm by using an eddy current separator (26, 27,28),
wherein the fractions (21) are kept dry when non-ferrous metal-containing fractions are separated, wherein the eddy current separator (26, 27, 28) comprises a feed belt for the supply of the non-ferrous metal-containing fractions and a drum with therein a magnetic rotor, wherein the drum is positioned at the end of the feed belt wherein the magnetic rotor is rotated against the conveyance direction of the feed belt during operation, wherein the magnetic rotor of the eddy current separator is rotated at a speed of at least 4000 rpm wherein an eddy current separator with a magnetic rotor with at least 40 magnetic poles is used.

2. Method according to claim 1 wherein the fractions are kept dry with regard to the pre-separation of iron-containing fractions and the separation of non-ferrous metal-containing fractions.

3. Method according to claim 1 or 2 wherein the slag is kept dry during the steps of the method.

4. Method according to one of the preceding claims wherein at least two eddy current separators are used in a cascade arrangement.

5. Method according to one of the preceding claims wherein the fractions with a dimension of at most 1 mm, the so-called fine dust fraction, are separated from the stream of fractions with dimensions up to at most 5 mm.

6. Method according to claim 5 wherein a method step is executed on the stream of fractions with dimensions of up to at most 5 mm for the step of separating the fine dust fraction where iron-containing fractions are separated.

7. Method according to one of the preceding claims wherein a neodymium magnetic roller of 9000-9500 Gauss is used for the pre-separation of iron-containing fractions.

8. Method according to one of the preceding claims wherein the pre-separation of iron-containing fractions is executed in a cascade set-up.

9. Method according to one of the preceding claims wherein fractions with a size of at least 5 mm are further separated in an A-stream of fractions of 5-60 mm and a B-stream of fractions of at least 60 mm.

10. Use of the method according to one of the claims 1-9 wherein residual clean slag fractions of at most 5mm are produced for use in the cement industry as raw material replacement.

11. Use of the method according to one of the claims 1-9 wherein a separation device for the execution of the method is positioned adjacent to the outlet of the waste incinerator for the separation of fractions from the waste incineration slag that have a size of at most 5 mm.

## Patentansprüche

1. Verfahren zum Trennen von metallenthaltenden Anteilen (20) von Abfallverbrennungsschlacke von einer Abfallverbrennungsanlage, umfassend die aufeinander folgenden Schritte:
- Zuführen der Abfallverbrennungsschlacke;
- Verarbeiten der Schlacke in Anteile;
- Vortrennen der Anteile, welche eine Größe von höchstens 5mm aufweisen, wobei eisenenthaltende Anteile getrennt werden (24, 25);
- Trennen von nicht-eisenhaltigen metallenthaltenden Anteilen (21), welche eine Größe von höchstens 5mm aufweisen, durch Verwenden einer Wirbelstromtrennvorrichtung (26, 27, 28), wobei die Anteile (21) trocken gehalten werden, wenn nichteisenhaltige metallenthaltende Anteile getrennt werden, wobei die Wirbelstromtrennvorrichtung (26, 27, 28) ein Zuführungsband für das Zuführen der nicht-eisenhaltigen metallenthaltenden Anteile und eine Trommel mit einem magnetischen Drehkörper darin umfasst, wobei die Trommel an den Enden des Zuführungsbandes angeordnet ist, wobei der magnetische Drehkörper während eines Betriebes gegen die Förderrichtung des Zuführungsbandes gedreht wird,
wobei ein magnetischer Drehkörper der Wirbelstromtrennvorrichtung mit einer Geschwindigkeit von mindestens 4.000 Umdrehungen pro Minute gedreht wird,
wobei eine Wirbelstromtrennvorrichtung mit einem magnetischen Drehkörper mit mindestens 40 magnetischen Polen verwendet wird.

2. Verfahren nach Anspruch 1, wobei die Anteile bezüglich der Vortrennung von eisenenthaltenden Anteilen und der Trennung von nicht-eisenhaltigen metallenthaltenden Anteilen trocken gehalten werden.

3. Verfahren nach Anspruch 1 oder 2, wobei die Schlacke während der Schritte des Verfahrens trocken gehalten wird.

4. Verfahren nach einem der vorhergehenden Ansprüche, wobei mindestens zwei Wirbelstromtrennvorrichtungen in einer Kaskadenanordnung verwendet werden.

5. Verfahren nach einem der vorhergehenden Ansprüche, wobei die Anteile mit einer Abmessung von höchstens einem 1mm, der sogenannte Feinstaubanteil, von dem Strom von Anteilen mit Abmessungen bis zu höchstens 5mm getrennt werden.

6. Verfahren nach Anspruch 5, wobei ein Verfahrensschritt auf dem Strom von Anteilen mit Abmessungen von bis zu höchstens 5mm für den Schritt des Trennens des Feinstaubanteils ausgeführt wird, worin eisenenthaltende Anteile getrennt werden.

7. Verfahren nach einem der vorhergehenden Ansprüche, wobei eine magnetische Neodymrolle von 9.000 bis 9.500 Gauss für die Vortrennung von eisenenthaltenden Anteilen verwendet wird.

8. Verfahren nach einem der vorhergehenden Ansprüche, wobei die Vortrennung von eisenenthaltenden Anteilen in einem Kaskadenaufbau ausgeführt wird.

9. Verfahren nach einem der vorhergehenden Ansprüche, wobei Anteile mit einer Größe von mindestens 5mm ferner in einen A-Strom von Anteilen von 5-60mm und einen B-Strom von Anteilen von mindestens 60mm getrennt werden.

10. Verwenden des Verfahrens nach einem der Ansprüche 1 bis 9 wobei restliche saubere Schlackeanteile von höchstens 5mm für eine Verwendung in der Zementindustrie als Rohmaterialersatz hergestellt werden.

11. Verwendung des Verfahrens nach einem der Ansprüche 1 bis 9 wobei eine Trennvorrichtung für die Ausführung des Verfahrens benachbart zu dem Auslass der Abfallverbrennungsanlage für die Trennung von Anteilen von der Abfallverbrennungsschlacke angeordnet ist, welche eine Größe von höchstens 5mm aufweisen.

## Revendications

1. Procédé pour séparer des fractions contenant des métaux (20) à partir de scories d'incinération de déchets provenant d'un incinérateur de déchets, comprenant les étapes successives consistant à :
- disposer des scories d'incinération de déchets;
- traiter les scories en fractions ;
- pré-séparer les fractions ayant une taille d'au plus 5 mm, les fractions contenant du fer étant séparées (24, 25) ;
- séparer les fractions contenant des métaux non ferreux (21) ayant une taille d'au plus 5 mm par utilisation d'un séparateur à courant de Foucault (26, 27, 28),
dans lequel les fractions (21) sont maintenues sèches quand les fractions contenant des métaux non ferreux sont séparées, le séparateur à courant de Foucault (26, 27, 28) comprenant une courroie d'alimentation pour la délivrance des fractions contenant des métaux non ferreux et un tambour avec un rotor magnétique dans celui-ci, le tambour étant positionné à l'extrémité de la courroie d'alimentation et le rotor magnétique tournant à l'encontre de la direction de convoyage de la courroie d'alimentation durant le fonctionnement,
dans lequel un rotor magnétique du séparateur à courant de Foucault tourne à une vitesse d'au moins 4000 t/min,
dans lequel est utilisé un séparateur à courant de Foucault avec un rotor magnétique ayant au moins 40 pôles magnétiques.

2. Procédé selon la revendication 1, dans lequel les fractions sont maintenues sèches pour la pré-séparation des fractions contenant du fer et de la séparation des fractions contenant des métaux non ferreux.

3. Procédé selon la revendication 1 ou 2, dans lequel les scories sont maintenues sèches durant les étapes du procédé.

4. Procédé selon l'une quelconque des revendications précédentes, dans lequel sont utilisés au moins deux séparateurs à courant de Foucault agencés en cascade.

5. Procédé selon l'une quelconque des revendications précédentes, dans lequel les fractions ayant une dimension d'au plus 1 mm, appelées fraction de poussières fines, sont séparées du courant de fractions ayant des dimensions allant jusqu'à 5 mm au plus.

6. Procédé selon la revendication 5, dans lequel une étape de procédé est exécutée sur le courant de fractions ayant des dimensions allant jusqu'à 5 mm au plus pour l'étape de séparation de la fraction de poussières fines lorsque des fractions contenant du fer sont séparées.

7. Procédé selon l'une quelconque des revendications précédentes, dans lequel un rouleau magnétique en néodyme de 9000 à 9500 Gauss est utilisé pour la pré-séparation de fractions contenant du fer.

8. Procédé selon l'une quelconque des revendications précédentes, dans lequel la pré-séparation de fractions contenant du fer est exécutée selon une organisation en cascade.

9. Procédé selon l'une quelconque des revendications précédentes, dans lequel des fractions ayant une taille d'au moins 5 mm sont en outre séparées dans un courant A de fractions de 5 à 60 mm et un courant B de fractions d'au moins 60 mm.

10. Utilisation du procédé de l'une quelconque des revendications 1 à 9, dans laquelle des fractions de scories propres résiduelles d'au plus 5 mm sont produites pour une utilisation dans l'industrie du ciment à titre de remplacement de matières premières.

11. Utilisation du procédé de l'une quelconque des revendications 1 à 9, dans laquelle un dispositif de séparation pour l'exécution du procédé est positionné adjacent à la sortie de l'incinérateur de déchets pour la séparation de fractions à partir des scories d'incinération de déchets qui ont une taille d'au plus 5 mm.
